(19) Europäisches Patentamt
European Patent Office
Office européen des brevets

(11) **EP 1 870 382 B1**

(12) **EUROPEAN PATENT SPECIFICATION**

(45) Date of publication and mention
of the grant of the patent:
**29.07.2009 Bulletin 2009/31**

(51) Int Cl.:
**C03B 37/012** (2006.01)

(21) Application number: **07010956.6**

(22) Date of filing: **04.06.2007**

(54) **Method for overcladding an optical fiber preform**

Verfahren zur Ummantelung einer Glasfaservorform

Procédé de gainage d'une préforme pour fibre optique

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.06.2006 FR 0605417**

(43) Date of publication of application:
**26.12.2007 Bulletin 2007/52**

(73) Proprietor: **Draka comteq B.V.**
**1083 HJ Amsterdam (NL)**

(72) Inventor: **Petitfrere, Emmanuel**
**59650 Villeneuve D'Ascq (FR)**

(74) Representative: **op den Brouw-Sprakel, Vera Stefanie Irene et al**
**Algemeen Octrooi- en Merkenbureau**
**P.O. Box 645**
**5600 AP Eindhoven (NL)**

(56) References cited:
**EP-A- 1 112 975          EP-A1- 0 845 441**
**EP-A2- 0 482 348         EP-A2- 1 279 646**

# Description

The present invention relates to a method for overcladding an optical fiber preform.

An optical fiber is produced by drawing a preform on a drawing tower. A preform generally comprises a primary preform consisting of a very high quality glass tube which forms a part of the cladding and the fibre core. This primary preform is then overcladded or sleeved to increase its diameter and form a preform which can be used on a drawing tower. Homothetic fibre drawing consists of placing the perform vertically in a drawing tower and drawing a strand of fibre from one end of the preform. For this purpose, a high temperature is locally applied to one tip of the preform until the silica softens, the drawing rate and the temperature then being permanently controlled during the drawing operation as they determine the diameter of the fibre.

The primary preform may be fabricated by successively depositing layers of pure and/or doped silica on the inside of the tube to form an inner cladding and a central core. The deposits in the tube are generally of Chemical Vapour Deposition type (CVD). This type of depositing is conducted by injecting gaseous mixtures into the tube and ionizing said mixtures. CVD-type depositing encompasses MCVD (Modified Chemical Vapour Deposition), FCVD (Furnace Chemical Vapour Deposition) and PCVD (Plasma Enhanced Chemical Vapour Deposition). The tube is then closed using a collapsing operation to form the primary preform.

The primary preform is then overcladded using silica particles, preferably natural silica particles which are of low cost, to obtain a final preform. The overcladding of the primary preform may be conducted by plasma deposition during which particles of natural silica are projected and fused by a plasma torch at a temperature in the region of 2300°C so that they vitrify on the periphery of the primary preform. The overcladding operation is generally conducted in a closed chamber under a controlled atmosphere to ensure a protection against electromagnetic disturbances and release of ozone emitted by the plasma torch.

The geometry of the preform must be well adapted to the ratios of the refractive indexes and diameters of the core and fibre cladding so that the drawn fibre has the required refractive index profile. For optical fibres, the refractive index profile is generally qualified in relation to a plotted graph showing the function associating the refractive index of the fibre with the radius of the fibre.

A precise control of the overcladding operation is therefore required to guarantee the homothetics of the geometry of the final preform and consequently the drawn fibre. A target diameter of the final preform is calculated from the diameter of the primary preform and the target profile of the fibre. This target diameter determines the overclad quantity to be deposited on the primary preform. The overclad depositing is then conducted in one or several passes, each pass corresponding to a translation movement of the plasma torch along the primary preform, and to the depositing of a controlled quantity of silica particles. Hence, with every overcladding pass, a certain thickness of silica cladding is deposited on the primary perform.

In general, each overcladding pass has a given thickness, e.g. 4 mm, corresponding to a given translation speed and a given silica particle flow rate. The problem is therefore to achieve the target diameter of the preform precisely when the last-but-one overcladding pass brings the preform to a diameter such that less than one pass thickness is needed to complete the overcladding. It is sought in effect to attain the target diameter of the overcladded preform with an accuracy in the order of 0.3 mm for a preform 90 mm to 100 mm in diameter.

One solution to this problem consists of reducing the flow rate of the silica particles projected onto the preform during the last overcladding pass in order to deposit a thinner overcladding layer and thereby reach the target diameter of the preform. Said solution is described for example in document EP-A-1 279 646.

Equipment for overcladding an optical fibre preform is also known from document EP-A-0 845 441 comprising a first depositing overclad torch along the preform and a plurality of second torches adapted so that each conducts a short back-and-forth movement over a given length of the preform. The longitudinal uniformity of the overcladding deposited along the primary preform is controlled, and one or more of the second torches may be actuated to correct any non-uniformity detected in the overcladding over a given length. The overcladding deposition by the first torch is conducted at a constant speed and with a variable particle flow rate to achieve the target diameter of the preform.

The solution of reducing the flow rate of the silica particles projected at the end of the overcladding operation has the disadvantage however of reducing the yield of the overcladding process and induces a productivity loss. The efficacy of silica particle projecting indeed increases with the diameter of the preform in the progress of being overcladded. In fact, at the start of the overcladding operation a large quantity of silica particles pass beside the primary preform as Its diameter is small then, as the diameter of the preform increases with the overcladding, an Increasing quantity of projected silica particles reaches the preform to be vitrified. The efficacy of the overcladding operation, in terms of yield with respect to the quantity of particles used, therefore increases with the diameter of the preform. Reducing the flow rate of the particles during the last pass therefore cancels out this increase in yield and reduces the overall productivity of the overcladding operation of the preform.

Equipment for overcladding an optical fibre preform Is also known from document EP-A-0 482 348 in which the quantity of overcladding deposited is continuously controlled using a calculation of the weight of the preform. When the preform reaches a target weight, the overcladding is stopped. However, this document does not indicate how the end of the overcladding operation is controlled.

There is therefore a need for an optical fibre overcladding method with which it is possible to achieve the target diameter of the preform precisely, with no loss of productivity and which is easy to implement.

It Is therefore proposed by the Invention to anticipate the target diameter of the preform before the preform diameter becomes such that less than one pass thickness is required to terminate the overcladding; and to reduce the translation speed of the torch along the preform to increase the thickness of a last pass, rather than reducing the flow rate of the projected silica particles to reduce the thickness of the last pass as in the prior art.

More particularly, the Invention proposes a method for overcladding an optical fibre preform having a given, final preform target diameter, the method comprising the steps of:

- providing a primary preform to be overcladded;
- successively depositing first overcladding layers by projecting and vitrifying silica particles on the primary preform In relative translation with a plasma torch, each first overcladding layer having a given, constant thickness and being deposited at a given, constant silica particle flow rate and at a given, constant translation speed;
- detecting a preform diameter that exceeds a given threshold but that is below the target diameter of the preform minus a thickness of a first overcladding layer;
- depositing a last overcladding layer having the remaining required thickness at a silica particle flow rate that is kept constant and with a reduced translation speed.

According to one embodiment, the given threshold to conduct depositing of the last overcladding layer is equal to the target diameter of the preform minus the thickness of three first overcladding layers.

According to another embodiment, the given threshold to conduct depositing of the last overcladding layer is equal to the target diameter of the preform minus the thickness of two first overcladding layers.

According to one characteristic, the depositing of the last overcladding layer Is made at a translation speed which, with respect to the constant translation speed for the depositing of the preceding overcladding layers, is reduced by a factor that is equal to the ratio of the constant thickness of a preceding layer over the remaining required thickness, in accordance with the following equation:

$$V' = V \cdot \frac{d}{D_0 - D_1}$$

in which

V' is the reduced translation speed for depositing the last layer;

V is the constant translation speed for depositing the preceding layers:

$D_0 - D_1$ is the remaining required thickness of the overcladding;

d is the constant thickness of the preceding overcladding layers.

According to one embodiment, the first overcladding layers have a constant thickness of between 3 mm and 6 mm.

Equipment for the overcladding of an optical fibre primary preform with a given target diameter of the final preform which is suitable for carrying out the method according to the invention comprises:

- a support to receive a primary perform;
- at least one plasma torch;
- means for translating the primary preform and/or the plasma torch to allow relative translation of the torch along the primary preform at controlled speed; .
- means for projecting silica particles at a controlled particle flow rate;
- means for measuring the diameter of the preform during the overcladding operation;
- a control unit adapted to receive the diameter measurement of the preform and adapted to Impose a given, substantially constant silica particle flow rate, and a given substantially constant translation speed for as long as the measured diameter of the preform is less than a threshold value, the electronic unit being adapted to control depositing of a last overcladding layer having the required remaining thickness at a silica particle flow rate maintained substantially constant and at a reduced translation speed.

Other advantages and characteristics of the invention will become apparent on reading the following description of embodiments of the Invention given by way of example and with reference to the drawings wherein:

Figure 1 is a schematic graph of the overcladding of an optical fibre preform, giving the length of the preform along the abscissa and the diameter of the preform along the ordinate axis.

Figure 2 is a schematic presentation of the equipment to be used in the method of the present invention.

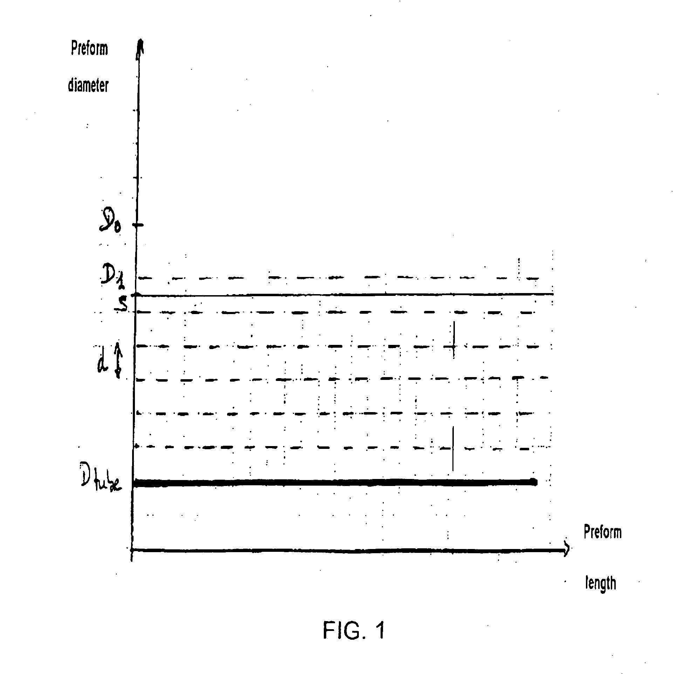

The invention proposes a method for overcladding an optical fibre preform. The final optical fibre preform has a given target diameter $D_0$, which may be in the order of 80 mm to 150 mm when drawing a single mode fibre, or in the order of 30 mm to 45 mm when drawing a multimode fibre. The primary preform, consisting of a silica tube in which an optical core and cladding have been deposited by any CVD technique, has a diameter In the order of 20 mm to 40 mm or 35 mm depending on the applications. Figure 1 shows the diameter of the primary preform $D_{tube}$ and the target diameter of the final preform Do. The required remaining thickness between the final diameter $D_0$ and the diameter of the primary preform $D_{tubo}$ is made up by overcladding the preform.

The primary preform is overcladded in several passes by depositing successive layers of overcladding until the target diameter $D_0$ of the final preform is reached. Each overcladding layer is deposited in one pass by projecting and vitrifying silica particles on the primary preform moving in relative translation with a plasma torch. Preferably natural silica particles are used for cost reasons, but synthetic and/or doped silica particles may also be used within the scope of the inventive method.

The inventive method proposes depositing the first overcladding layers at a given constant flow rate Fx of the silica particles, and at a given constant translation speed V; each overcladding layer thus deposited therefore has a given constant thickness d, e.g. between 3 mm and 6 mm.

The inventive method proposes detecting a diameter $D_1$ of the preform during the overcladding operation which reaches a given threshold S, which corresponds to a preform diameter such that more than one pass but less than two or three passes of constant thickness d are required to terminate the overcladding operation.

The inventive method therefore proposes the depositing of a last overcladding layer, having the required remaining thickness ($D_0$-$D_1$), at a silica particle flow rate Fx that is maintained constant but at a reduced translation speed V'<V.

For example, as illustrated in figure 1, the given threshold S may be equal to the target diameter $D_0$ minus the thickness of two overcladding layers deposited at constant translation speed V and constant particle flow rate Fx. The depositing of the last overcladding layer is therefore realized by detecting a preform diameter $D_1$ such that more than one layer of constant thickness d is required to terminate overcladding but less than two overcladding layers of constant thickness d are required to reach the target diameter $D_0$; i.e. a diameter $D_1$ such that $D_0$-2d≤$D_1$ ≤$D_0$-d. According to another, non-illustrated, example the given threshold S may be equal to the target diameter $D_0$ minus the thickness of three overcladding layers deposited at a constant translation speed V and constant particle flow rate Fx. The depositing of the last overcladding layer is therefore conducted on detecting a preform diameter $D_1$ such that more than one layer of constant thickness d is required to terminate overcladding but less than three overcladding layers of constant thickness d are required to reach the target diameter $D_0$, i.e. a diameter $D_1$ such that $D_0$-3d ≤$D_1$ ≤$D_0$-d.

A last pass, of greater thickness than the constant thickness d of the first passes is then carried out, contrary to the prior art method which proposed making a last pass of lesser thickness than the preceding passes.

For this purpose, the inventive method proposes reducing the translation speed V' of the last pass with respect to the translation speed V of the other passes, whilst maintaining a constant flow rate Fx of the particles projected onto the preform. In particular, the translation speed V' of the last pass of the inventive method is reduced with respect to the constant depositing speed V of the preceding layers by a factor that is equal to the ratio of the constant thickness of a preceding layer (d) over the remaining required thickness ($D_0$-$D_1$). The reduced speed of the last pass can therefore be expressed in relation to the constant speed of the other passes in accordance with the following equation:

$$V' = V \cdot \frac{d}{D_0 - D_1}$$

The thickness of the last deposited layer is therefore increased by reducing the translation speed V' of the torch. Evidently, the duration of the last, thicker, pass is longer than the preceding passes, but the overall duration of the overcladding process is not effected since the last pass of the inventive method replaces the two or three last passes of the prior art methods. It was also found by the applicant that the quality of the silica deposited in a thick layer during the last pass is as good as the silica of the preceding, thinner, layers. In addition, the particle vitrification yield on the preform is no longer affected at the end of the process since the particle flow rate is maintained constant.

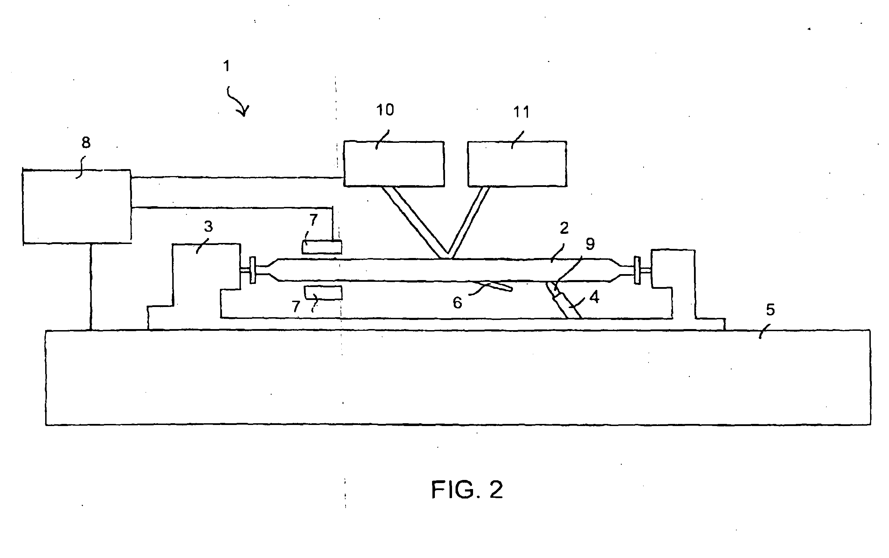

Figure 2 shows an equipment 1 for the overcladding of an optical fiber primary preform 2 with a given, final preform target diameter ($D_0$), the equipment comprising: a support 3 to receive a primary preform 2, a plasma torch 4 with plasma flame 9, means 5 for translating either the primary preform 2 or the plasma torch 4 or both to allow a relative translation of the plasma torch 4 along the primary preform 2 at a controlled speed; means 6 for projecting silica particles at a controlled flow rate, the silica particles being stored in a particle reservoir 10; means 7 for measuring the diameter of the preform during the overcladding operation and a control unit 8 adapted to receive the diameter measurement of the means 7 of the preform 2 and adapted to Impose a given, substantially constant silica particle flow rate and a given substantially constant translation speed for as long as the measured diameter ($D_1$) of the preform 2 is less than a threshold value, the control unit being adapted to control depositing of a last overcladding layer having the required remaining thickness ($D_0$-$D_1$) at a silica particle flow rate (Fx) maintained substantially constant and at a reduced translation speed (V'<V).

The preform 2 is mounted onto the sides of the support 3 such that the support 3 rotates the preform 2 about the preforms 2 longitudinal axis. By way of example, the support 3 rotates the preform 2 with a rotational velocity of from approximately 1-50 revolutions per minute, and more preferably from 3-30 revolutions per minute.

The means 6 for projecting silica particles is connected to at least a reservoir 10 containing silica particles and a reservoir 11 containing a gas. The silica particles in reservoir 10 may be transported to projecting means 6 by means of a hopper (not shown) and under the Influence of gravity. The flow of silica particles is then combined with the gas from reservoir 11. Thus in operation, that is, during the overcladding process, the silica particles and the gas pass through the projecting means 6 simultaneously. Such a configuration enables the flows of the gas and the silica particles leaving projecting means 6 to be controlled accurately. The reservoir 11 may contain a single gas, or a mixture of more than one gas. The reservoir 11 may also comprise a gass supply system, consisting of several gas supply sources and flow controllers. A gas that is typically used during the overcladding of a primary preform with silica particles is SF6.

The invention also proposes the equipment suitable for overcladding an optical fibre primary preform using the present method wherein a silica particle projector may be integrated In the plasma torch. The silica particles are projected onto the preform 2 at a given, constant flow rate Fx. The primary preform 2 is caused to rotate and the plasma torch 4 moves in translation along the preform 2 - or a twofold movement is imparted to the primary preform 2 i.e. rotating about itself and translating in front of the plasma torch 4. The speed of translation of the plasma torch 4 along the preform 2 is controlled by a control unit 8.

The equipment also comprises means 7 for measuring the diameter of the preform 2 during the overcladding operation, e.g. an industrial viewing system consisting of a measuring instrument such as a camera or laser micrometer, and a signal processing unit of PC-computer type or commercial display unit. The inventive equipment also comprises a control unit 8 adapted to receive the measurement of the preform diameter and adapted to maintain a constant flow rate Fx of the silica particles, and a given constant translation speed V, for as long as the measured preform diameter $D_1$ is less than a threshold value S. When the electronic control unit 8 detects after a certain pass or layer is completed that the preform diameter $D_1$ has reached or exceeded this threshold value S, such that less than two or three passes of constant thickness are required to reach the target diameter $D_0$, it orders depositing of a last overcladding layer having the remaining required thickness ($D_0$-$D_1$) at a silica particle flow rate Fx that is maintained constant and at a reduced translation speed V' in accordance with the previously established equation.

The inventive method allows an optical fibre preform to be overcladded with a precise target diameter, and an increase in productivity to be achieved.

Further embodiments of the present invention are mentioned in the appended claims.

## Claims

1. A method for overcladding an optical fiber preform having a given, final preform target diameter ($D_0$), the method comprising the steps of:

   - providing a primary preform to be overcladded;
   - successively depositing first overcladding layers by projecting and vitrifying silica particles on the primary preform in relative translation with a plasma torch, each first overcladding layer having a given, constant thickness (d) and being deposited at a given, constant silica particle flow rate (Fx) and at a given, constant translation speed (V);
   - detecting a preform diameter ($D_1$) that exceeds a given threshold (S) but is below the target diameter ($D_0$) of the preform minus a thickness of a first overcladding layer (D, < $D_0$-d);
   - depositing a last overcladding layer having the remaining required thickness ($D_0$-$D_1$) at a silica particle flow rate that is kept constant (Fx) and at a reduced translation speed (V'< V).

2. The method of claim 1, wherein the given threshold (S) to conduct depositing of the last overcladding layer is equal to the target diameter of the preform minus the thickness of three first overcladding layers deposited at a constant particle flow rate and speed ($D_0$-3d).

3. The method of claim 1, wherein the given threshold (S) to conduct depositing of the last overcladding layer Is equal to the target diameter of the preform minus the thickness of two first overcladding layers deposited at a constant particle flow rate and speed ($D_0$-2d).

4. The method of claim 1, 2 or 3, wherein the depositing of the last overcladding layer is made at a translation speed (V') which, with respect to the constant translation speed (V) for the depositing of the preceding overcladding layers, is reduced by a factor that is equal to the ratio of the constant thickness (d) of a preceding layer over the remaining required thickness ($D_0$-$D_1$), in accordance with the following equa-

tion:

$$V' = V \cdot \frac{d}{D_0 - D_1}$$

5. The method of any one of claims 1 to 4, wherein the first overcladding layers have approximately constant thickness (d) comprised between 3 mm and 6 mm.

**Patentansprüche**

1. Verfahren zum Ummanteln einer optischen Faservorform, die einen vorgegebenen, fertigen Vorform-Zieldurchmesser ($D_0$) aufweist, wobei das Verfahren die folgenden Schritte umfasst:

- Bereitstellen einer anfänglichen Vorform, die ummantelt werden soll;
- aufeinanderfolgendes Aufbringen erster Ummantelungsschichten durch Werfen und Verglasen von Silica-Partikeln auf die anfängliche Vorform bei einer relativen Translation mit einem Plasmabrenner, wobei jede erste Ummantelungsschicht eine vorgegebene, konstante Dicke (d) aufweist und bei einer vorgegebenen, konstanten Silica-Partikel-Flussrate (Fx) und bei einer vorgegebenen, konstanten Translationsgeschwindigkeit (V) aufgebracht wird;
- Detektieren eines Vorformdurchmessers ($D_1$), der einen vorgegebenen Schwellwert (S) übersteigt, aber unterhalb des Zieldurchmessers ($D_0$) der Vorform abzüglich einer Dicke einer ersten Ummantelungsschicht ($D_1 < D_0$-d) liegt;
- Aufbringen einer letzten Ummantelungsschicht, die die verbleibende benötigte Dicke ($D_0$-$D_1$) aufweist, bei einer Silica-Partikel-Flussrate, die konstant gehalten wird (Fx) und bei einer verringerten Translationsgeschwindigkeit (V'<V).

2. Verfahren nach Anspruch 1, wobei der vorgegebene Schwellwert (S) zum Durchführen des Aufbringens der letzten Ummantelungsschicht gleich dem Zieldurchmesser der Vorform abzüglich der Dicke von drei ersten Ummantelungsschichten, die bei einer konstanten Partikelflussrate und Geschwindigkeit aufgebracht wurden, ist ($D_0$-3d).

3. Verfahren nach Anspruch 1, wobei der vorgegebene Schwellwert (S) zum Durchführen des Aufbringens der letzten Ummantelungsschicht gleich dem Zieldurchmesser der Vorform abzüglich der Dicke von zwei ersten Ummantelungsschichten, die bei einer konstanten Partikelflussrate und Geschwindigkeit aufgebracht wurden, ist ($D_0$-2d).

4. Verfahren nach Anspruch 1, 2 oder 3, wobei das Aufbringen der letzten Ummantelungsschicht bei einer Translationsgeschwindigkeit (V') erfolgt, welche in Bezug auf die konstante Translationsgeschwindigkeit (V) zum Aufbringen der vorangehenden Ummantelungsschichten um einen Faktor verringert ist, der gleich dem Verhältnis der konstanten Dicke (d) einer vorangehenden Schicht zu der verbleibenden benötigten Dicke ($D_0$-$D_1$) ist, gemäß der folgenden Formel:

$$V' = V \cdot \frac{d}{D_0 - D_1}$$

5. Verfahren nach einem der Ansprüche 1-4, wobei die ersten Ummantelungsschichten eine näherungsweise konstante Dicke (d) aufweisen, die zwischen 3 mm und 6 mm liegt.

**Revendications**

1. Procédé de gainage d'une préforme de fibre optique ayant un diamètre cible de préforme final ($D_0$) donné, le procédé comprenant les étapes consistant à :

- fournir une préforme principale à gainer ;
- déposer successivement des premières couches de gainage en projetant et en vitrifiant des particules de silice sur la préforme principale en translation relative avec un chalumeau au plasma, chaque première couche de gainage ayant une épaisseur constante (d) donnée et étant déposée à un débit de particules de silice constant (Fx) donné et à une vitesse de translation constante (V) donnée ;
- détecter un diamètre de préforme ($D_1$) qui dépasse un seuil (S) donné mais qui est inférieur au diamètre cible ($D_0$) de la préforme moins une épaisseur d'une première couche de gainage ($D_1 < D_0$-d) ;
- déposer une dernière couche de gainage ayant l'épaisseur requise restante ($D_0$-$D_1$) à un débit de particules de silice qui est maintenu constant (Fx) et à une vitesse de translation réduite (V' < V).

2. Procédé selon la revendication 1, dans lequel le seuil (S) donné pour effectuer le dépôt de la dernière couche de gainage est égal au diamètre cible de la préforme moins l'épaisseur de trois premières couches de gainage déposées à des débit et vitesse de particules constants ($D_0$-3d).

3. Procédé selon la revendication 1, dans lequel le seuil (S) donné pour effectuer le dépôt de la dernière couche de gainage est égal au diamètre cible de la préforme moins l'épaisseur de deux premières couches de gainage déposées à des débit et vitesse de particules constants ($D_0$-2d).

4. Procédé selon la revendication 1, 2 ou 3, dans lequel le dépôt de la dernière couche de gainage est effectué à une vitesse de translation (V') qui, par rapport à la vitesse de translation constante (V) pour le dépôt des couches de gainage précédentes, est réduite d'un facteur qui est égal au rapport entre l'épaisseur constante (d) d'une couche précédente et l'épaisseur requise restante ($D_0$-$D_1$), selon l'équation suivante :

$$V' = V \cdot \frac{d}{D_0 - D_1}$$

5. Procédé selon l'une quelconque des revendications 1 à 4, dans lequel les premières couches de gainage ont une épaisseur à peu près constante (d) comprise entre 3 mm et 6 mm.

FIG. 1

FIG. 2

EP 1 870 382 B1

**EP 1 870 382 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1279646 A
- EP 0845441 A
- EP 0482348 A